# EUROPEAN PATENT SPECIFICATION

(11) **EP 0 792 209 B1**
(45) Date of publication and mention of the grant of the patent: **02.09.1998**
(21) Application number: 95936744.2
(22) Date of filing: 14.11.1995
(51) Int. Cl.: B29C 70/76, B29K 75/00, B29L 31/26

(54) **PROCESS AND DEVICE FOR ENVELOPING THE EDGES OF A GLASS PANE WITH A POLYURETHANE GASKET**
VERFAHREN UND VORRICHTUNG ZUM UMMANTELN VON GLASSSCHEIBENKANTEN MIT EINER POLYURETHANDICHTUNG
PROCEDE ET DISPOSITIF PERMETTANT D'ENVELOPPER LES BORDS D'UNE PLAQUE DE VERRE AVEC UN JOINT EN POLYURETHANE

(30) Priority: 16.11.1994 IT RM940747
(43) Date of publication of application: 03.09.1997
(73) Proprietor: Società Italiana Vetro - SIV S.p.A., 66050 San Salvo (Chieti) (IT)
(72) Inventor: CAPRIOTTI, Luigi, I-63039 S. Benedetto del Tronto (IT); GRAMELLINI, Ermes, I-41013 Castelfranco Emilia (IT); CALDORO, Nicola, I-10128 Torino (IT)
(74) Representative: Bazzichelli, Alfredo
(86) International application number: IT9500186
(87) International publication number: WO9614979

(56) References cited:
- EP-A- 0 173 907
- EP-A- 0 375 485
- EP-A- 0 436 438
- US-A- 4 839 122
- US-A- 4 999 147
- US-A- 5 268 183

## Description

### Technical Field

The present invention relates to a process for the manufacture of a glazing module comprising a pane of glazing material to be used in automotive applications, and a gasket adhering to its peripheral area.

The present invention also relates to a device that carries out such process.

### Industrial Applicability

The automotive glazing market requests glazing material already equipped with the gasket, so that the assembler, for example the car manufacturer, is only obliged to glue such glazing material onto the automobile structure. By so doing the glazings assembly costs are reduced.

### Background Art

Different processes developed for the manufacture of window and gasket assembly are known by the state of the art.

The Italian patent n. 1.178.437 of Libbey Owens Ford Company (L.O.F.) describes a process for the manufacture of a window and gasket assembly that uses a polyurethane composition injected into a metal mold, method known by the state of the art with the initials RIM (Reaction Injection Moulding), and which has been widely spread in the industry.

The main advantage of this method lies in the speed with which the mold is filled and in the composition's high reaction speed so a finished piece is obtained in less than a minute and a half. Nevertheless, such process presents some drawbacks: the high injection speed induces, in the filling phase, high pressure values, so the mold itself must be made of metal by consequence at high costs; the mold must be equipped with a temperature control device because it must be kept within a certain rate in order to optimize the reaction time; the gasket has residual flash due to the flowability of the material and to the high pressure; furthermore the bent pane interlayered often presents a change in shape that is not absorbed by the mold causing it to break; it is then necessary to apply to the mold an antistiking agent in order to easily extract the finished piece, without ripping the gasket.

In executing such process, even if quick, proves to be very expensive for the type of mold it requires, for the very close tolerances to be respected by the pane to be encapsulated and for the fact that the application of an antistiking agent and an additional operation of residual flash removal is needed.

Another process for the manufacture of glass gasket assembly known by the state of the art is that of the European patent n. 121481 belonging to S. Gobain which describes a method for the application of a gasket on glass by an extrusion process and subsequent hardening of a polymer directly on the peripheral surface of the glass. The assembly is then sealed on the car's bodywork. The main drawbacks in this case are: the beginning and the end of the extruded gasket must be joined by a connecting operation which is carried out separately; if such connection is visible from the outside and is not hidden inside the bodywork of the car, the operation requires a long time and expensive methods. Furthermore the extrusion cannot supply a gasket that extends much beyond the outer edge of the glass; in this case in fact it is necessary to use one or more "supporting molds" that determine the increase of the production costs. An additional drawback of such process consists in the fact that gaskets presenting section changes along the perimeter of the glass cannot be produced.

U.S. patent US-A-5,268,183 describes a mold apparatus for forming encapsulated glass which includes a plurality of mold sections which, when closed, cooperate with a sheet and at least one seal to define a gasket forming cavity.

One of the molds is made of resilient material, the other mold of rigid material, such as rigid resin or metal.

EP-A-0 436 438 also describes an operation of molding a gasket on a glass pane, in which the half-molds are of elastomeric material. The particular solution proposed in this patent is a heating by high frequency radiation of the material injected into the mold cavity.

EP-A-0 375 485 describes a process for forming a peripheral gasket on the edge of a double-glazing for windows by means of a set of modular molds put allaround the glazing.

US-A-4 999 147 describes a process for forming a gasket on a composite bilayer glass formed of a glass layer and a transparent elastic plastic layer. The problem in this document is the protection of the weaker plastic layer during the process.

### Disclosure of the Invention

The object of the present invention is to eliminate the above mentioned drawbacks. The invention, characterized by the claims, solves the problem of manufacturing a glazing module that does not show the typical flashes of the RIM process of the LOF patent and that at the same time does not need a connecting operation, in addition to the extrusion one, as does the S. Gobain patent, thus achieving the favourable effect of manufacturing a glazing module at low costs and however much lower than those of the state of the art.

This scope is reached through the improvement of the RIM method known by the state of the art. For the present description the definition of glazing material applies to safety glass such as tempered glass, laminated glass, double glazed glass, covered or uncovered with antilacerating film or with sun-proof thin layers and all glasses that conform to the ECE 43 standards for automotive use, and applies also to plastic transparent material such as, for example, polycarbonate.

The process object of the present invention provides the molding of a gasket on an automotive glazing material by filling a mold, made of plastic material, with a polyurethane composition, at a slow speed, selected so as to show an appropriate gel time. The filling speed is selected in such a way that the filling time of the entire mold is less than the gel time of the composition; the pressure in the mold must be low enough in order not to deform the plastic material walls that make up the mold's cavity.

Such improvement provides a much slower process, when compared to the RIM process patented by LOF, but consents to obtain pieces without flash and less breakage of the pane.

In fact the molds, according to an additional favourable characteristics of the process object of the present invention, are built with plastic materials chosen among those that are self-sealing on its own surface and on the pane and antistiking with respect to polyurethane elastomers.

Therefore they are built with a silicone elastomer and/or fluoride silicone elastomer or with polyurethane fluoride elastomer or as a stratification of such fluoride silicone on a silicone elastomer base. The walls of the cavity to be filled, in a different realization, can show a thin antistiking metal insert supported by the elastomer body of the mold.

The above mentioned elastomers can be used as they are or charged, for example with glass microsphers, in order to increase compactness and hardness, to prevent shrinkage and also to decrease the required amount of elastomer, thus further reducing the manufacturing costs of the mold.

The mold, made up of two half-molds that when joined together generate the cavity showing the final section and position of the gasket, it is realized by copying from a reproducing pattern using the simple and well-known technique that casts the material on the pattern and waits for it to harden. In case there is the presence of metal insert, this is applied on the reproducing pattern and subsequently on the mentioned metal insert the casting of the elastomer takes place.

The use of molds made of plastic materials easily compensate the dimensional variations of the pane to be processed, thus reducing breakage; furthermore, thanks to the characteristics of the self-sealing materials on the pane and thanks to the fact that the work is carried out under low pressure, a processed piece is obtained without flashes in correspondence to the closing area of the two half-molds.

After having removed the glazing module from the mold the only operation in fact that is carried out is the removal of the two feed-heads, one on the entrance to the composition and the other on air discharge. In the process object of the present invention the low pressure definition is referred to the maximum pressure values required for filling the mold lower than 3 kg/cm² and the definition of gel time is referred to values which are equal or above 30 seconds.

It is referred that the " introducing or filling pressure" is the rate of the counter-pressure generated by the sliding resistance in the mold and read by means of a gauge located on the entrance flow.

The gel time is defined as: the time that takes the polyurethane composition at a 25 °C to reach a viscosity that will not cast freely.

The filling takes place with a composition made up of a prepolymer belonging to the family of reaction products between aromatic and/or aliphatics isocyanates modified in such a way that the same must result liquid at a temperature between 25°C and 35°C and polyols (polyether and/or polyester and/or polycaprolactones).

In order to obtain a polyurethane elastomer, such prepolymers are then reacted with an adequate amount of chain extender chosen between the aromatics and/or aliphatics amines and/ or short chain polyols, with an NCO index that ranges from 1,00 to 1,10,.

The components of the mixture are chosen so that the reaction speed gives a gel time, measured at a 25°C, equal or above 30 seconds. Before the filling operation, a degassing operation of the composition is preferably carried out.

The mold has an entrance hole, where the composition is poured, and an exit hole where air discharge is possible. Depending on the condition of the process and on the size of the pane, additional adequately arranged entrance/exit holes are forecasted.

Since the mold's filling pressure is very low and however not above 3 Kg cm², it is preferred that the air discharge hole have a diameter at least equal to the composition's entrance hole in order to help as much as possible flowing of the poured liquid inside the mold's cavities.

Such condition makes the mold's filling operation similar to the one defined as " open sky" in order to indicate the composition's injection pressure rates which are substantially close to the 1kg/ cm² rate.

An object of the present invention is a process for the realization of a glazing module comprising a pane of glazing material to be used in automotive applications and a polyurethane gasket adhering to its peripheral area, where such gasket is produced by polymerization of a mixture comprising a) a prepolymer composition made up by the reaction product of isocyanate and polyols and b) a chain extender and that fills a mold directly applied on the pane, characterized by the introduction operation of said mixture into said mold in the presence of an outlet for the pressure created in the mold by the introduction of the same mixture and with a mold filling speed chosen so that the total filling time of the mold be less than the gel time of the same mixture, and characterized by the fact of using the heat contribution developed by the polyurethane exothermic polymerization reaction in order to establish the temperature inside the mold and by the fact of utilizing as mold one mold made up by a self-sealing elastomer on its own surface or on the pane and antisticking with respect to the polyurethane, obtained said mold by means of a molding operation on a reproduction model of such gasket.

An additional object of this invention is a mold for the realization of a glazing module comprising a pane of glazing material to be used in automotive applications and polyurethane gasket adhering to its peripheral area, where such gasket is produced by a polymerization of a mixture comprising a) a prepolymer composition made up by the reaction product of isocyanates and polyols and b) a chain extender, said mold having an internal cavity and entrance and exit holes for the introduction of said mixture to be polymerized, characterized by the fact that it is made up of a elastomeric plastic material chosen from the class that includes the silicone elastomers, fluoridated silicones or fluoridated polyurethane or by a combination of these, having self-sealing characteristics on themselves or on the pane and antisticking with respect to polyurethane and by the fact that the inside mold's temperature is established by using the heat contribution developed by the exothermic polymerization reaction of said mixture.

Vantageously the mold used to activate the process according to the invention shows a ring configuration that surrounds the peripheral area of the pane to be molded, leaving therefore visible most part of surface of the pane itself, conferring this way to the shaping device the features of lightness, manageability and quicker interchangeability.

The advantages obtained with the present invention, when compared to the RIM process known by the state of the art, consist in the reduction of the mold's manufacturing costs, in the reduction of the composition's feeding system costs, in the reduction of the costs due to the lack of accessory operations (mold release application, flash removal), since the molds are heated by exothermic reaction there are no heating costs, increase in the total production yield as a consequence of less pane being broken and utilization flexibility. In fact, in this last case, thanks to the lightness of the molds, it is possible to build a large number of molds, prepared to produce different models, assembled on a carousel, fed by a single dosing machine, reaching thus a utilization flexibility which cannot be obtained with other known processes, as for example with the RIM method or with the extrusion method.

### Brief Description of Drawings

Additional advantages and characteristics of the invention will be cleared as a result of the following description, given merely as a non limiting example and referred to in the attached drawings in which:
- figure 1 represents a longitudinal sectional view of the mold realized according to the following invention;
- figure 2 represents a perspective view of the mold according to the invention.

### Best Mode for Carrying out the Invention

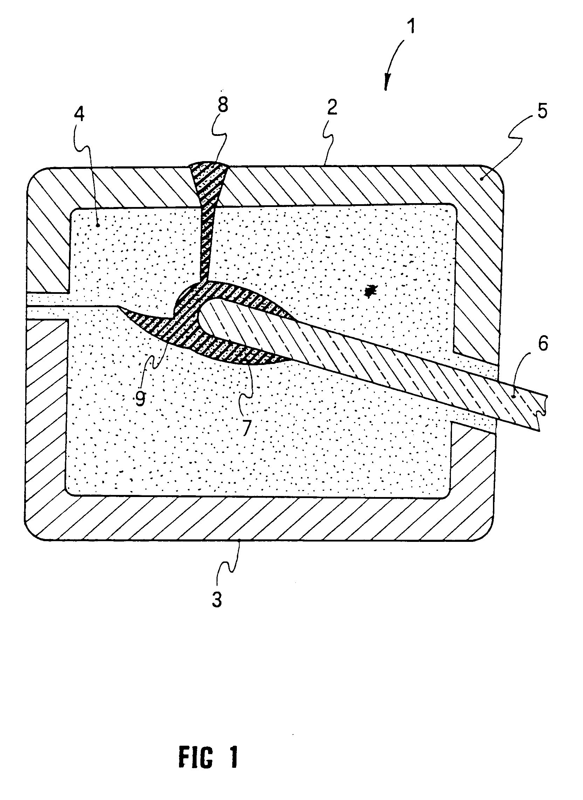

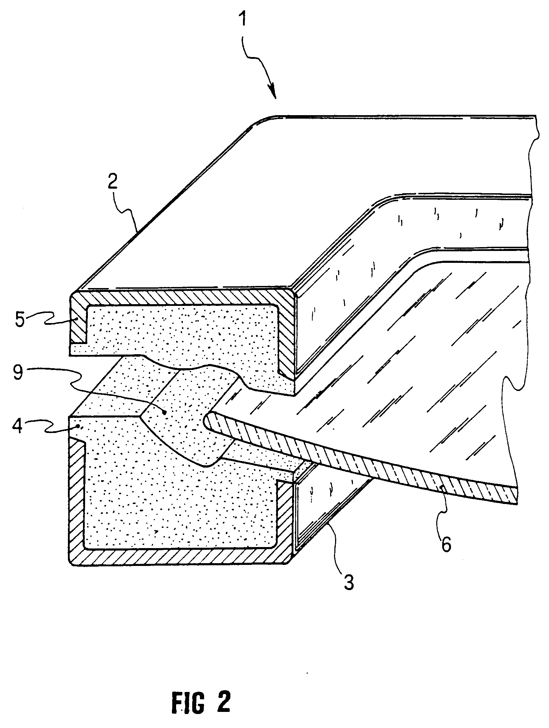

According to the present invention a polyurethane composition is introduced at a pressure not higher than 3Kg/cm ² in the cavity of a mold built according to the references in figures 1 and 2.

A mold 1 is built in two parts: a half-mold 2 and a half-mold 3 placed on opposite sides and complementary with respect to the pane 6 where gasket 7 is applied on its periphery.

The half-molds 2 and 3 are made of plastic material 4, self-sealing on its own surface and on the pane 6; silicone elastomer or polyurethane fluoride or a combination of these is used as plastic material 4; such material 4 is contained in a light metal structure 5, preferably aluminium, with the scope of giving the necessary rigidity to the manipulations.

When the half-molds 2 and 3 close on themselves and on pane 6, by means of handling equipment not shown in the drawing, a cavity 9 is formed having the shape and the position of the final gasket. A casting hole 8 crosses the metal structure 5 and the material 4 in order to allow the introduction of the polyurethane composition on cavity 9. Such composition is distributed by a dosing machine not shown in the drawing.

One or more holes for air discharge, not shown in the drawing, are appropriately located on the half-molds; the diameter and the number of air discharge holes depends on the circulation difficulty of the composition in the mold.
The air discharge hole diameter is preferably equal to or larger than the entrance hole diameter so as to approach as close as possible the "open sky" conditions.

The two half-molds 2 and 3 have no additional devices in order to guarantee the seal drafting of the composition from cavity 9 for the following reasons: the casting pressure in the mold is very low (not higher than 3 Kg/cm²); the material 4 is self-sealing, therefore upon closing the two parts, sufficient seal is guaranteed so as to avoid flash formation.

In order to build the half-molds 2 and 3 the plastic material in a liquid state is casted on a reproducible model that shows the copy of the gasket to be obtained; such plastic material reticulates on such shape and generates the desired mold. The internal part of the mold's cavity can if necessary be covered with a metal layer to increase the life of the mold itself. The layer will be vantageously thin enough so that the elastic characteristics of the mould's material will not be altered.

Furthermore the general configuration of the mold can be preferably built having the shape of a ring which surrounds the peripheral area of the pane without occupying the central part of the same pane. This allows the application of the gasket on the pane in the desired position with equipment having a reduced overall dimension and weight, so as to render the mold's accessory handling equipment simpler and less expensive.

For the sake of merely giving a non -limiting example follows a preferred shape for the realization of a half-mould 2 in silicone elastomer.

The half-mold 2 reproducible model is closed on container 5; the necessary amount of silicone elastomer, preferably mixed with a variable percentage of glass microsphers that goes from 2 to 4%, is casted in an hole opportunely made in the container and the air is discharged from the outlets. After the necessary drying time (24 hours with 40 -50% humidity) the half-mold is extracted and ready to be utilized.

Figure 2 represents a preferred realization of a mold used in the present process consisting of a ring-shape that surrounds the periphery of pane 6. Mold 1 made up of the half-molds 2 and 3 leaves uncovered most part of pane surface 6, giving the entire device manageability and lightness features.

The polyurethane composition is introduced in the mold with a maximum pressure below 3 Kg/cm² in the cavity of mold 9, made up by the half-mold 2 and 3 closed on pane 6 and on themselves.

An example of a polyurethane composition suitable to be used in the process according to the present invention is given as a non-limiting example.

### EXAMPLE 1

A pure diisocyanate type MDI (diphenylmethane-diisocyanate) having 33,6% of NCO, is reacted with a polyether with OH numbers equal to 56.

Utilizing 55 g of weight for the isocyanate and 45 g for the polyols polyether having an OH equal to 56 a prepolymer is prepared containing 16,5% ± 0,3 of free NCO.

Later 100 g of the above mentioned prepolymers are mixed with 138 g of a mixture made up of 127 g of polyols having a molecular weight of 2000, 11 g of butandiol, 1,0 of an UV absorber, 0,8 of an amino catalyst and 2,2 g of a pigment realizing an NCO index of about 1,05. A degassing operation of the above described mixture is preferably carried out immediately before filling in the mold.

The mixture has a gel time of a minute and thirty seconds. Said composition, is introduced, at a temperature of 35°C, with a maximum pressure lower than 2,4 Kg/cm², into mold 1, realized as previously mentioned, and left without any thermostatic control.

The introduction pressure of the composition into mold 1 is measured as the value of the back pressure generated by the flowing pressure resistance into the same mold and measured by a gauge located on the entrance flow.

The extraction time of the pane gasket assembly from the mold, made up with such composition, is equal to 15 minutes.

The gasket does not show flashes and undergoes only a rapid removal operation of the casting feed-heads.

The tests for UV resistance, humidity and high temperatures and the mechanical tests anticipated in the specifications have given positive results.

In particular, 24 hours after the extraction, a hardness value was found at an environmental temperature of 70 Shore A.

## Claims

1. A process for the realization of a glazing module comprising a pane (6) of glazing material to be used in automotive applications and a polyurethane gasket (7) adhering to its peripheral area, where such gasket is produced by polymerization of a mixture comprising a) a prepolymer composition made up by the reaction product of isocyanate and polyols and b) a chain extender and that fills a mold directly applied on the pane, wherein said mixture is introduced into said mold (1) through an entrance hole (8) in the presence of an outlet hole for the pressure created in the mold by the introduction of the same mixture characterized in that the mold filling speed is so chosen that the total filling time of the mold is less than the gel time of the same mixture, further characterized by using exclusively the heat developed by the polyurethane exothermic polymerization reaction in order to establish the reaction temperature inside the mold, by the fact of utilizing as mold one mold made up by an elastomer self-sealing on its own surface and on the pane and antisticking with respect to the polyurethane, said mold having been obtained by means of a molding operation on a reproduction model of such gasket and by the fact that said outlet hole has a diameter not smaller than the diameter of the entrance hole of the mixture.

2. A process according to claim 1, where said isocyanates are aromatic or aliphatic isocyanates both liquid at a temperature between 23 and 35°C.

3. A process according to any of the claims 1 or 2, where said mixture has a gel time which is not less 30 seconds at a 25°C temperature.

4. A process according to any of the claims from 1 to 3, where the introduction pressure measured in the mold is not greater then 3 Kg/cm².

5. A process according to any of the previous claims, where the temperature of said mixture introduced in the mold is not less than 25°C.

6. A process according to any of the previous claims, where the introduction of said mixture is preceded by a degassing operation therefore the polymerization of the same mixture produces a polyurethane material which is a compact elastomer.

7. A process according to any of the preceding claims, where said glazing material is tempered glass or laminated glass or double-glazing glass or a combination of these.

8. A process according to claim 7, where the glass is covered by antilacerating films or by thin layers of sun-reflective coating.

9. A process according to any of the claims from 1 to 6 , where said glazing material is plastics transparent material.

10. Mold for the realization of a glazing module comprising a pane (6) of glazing material to be used in automotive applications and polyurethane gasket (7) adhering to its peripheral area, where such gasket is produced by a polymerization of a mixture comprising a) a prepolymer composition made up by the reaction product of isocyanates and polyols and b) a chain extender, said mold (1) having an internal cavity (9) and entrance and outlet hole for the introduction of said mixture to be polymerized, characterized by the fact that said mold is made up of a elastomeric plastic material chosen from the class that includes the silicone elastomers, fluoridated silicones or fluoridated polyurethane or by a combination of these, having self-sealing characteristics on themselves and on the pane and antisticking with respect to polyurethane said outlet hole having a diameter not smaller than the diameter of the entrance hole of the mixture and by the fact that the inside mold's temperature is established exclusively by using the heat contribution developed by the exothermic polymerization reaction of said mixture.

11. Mold according to claim 10 where said glazing material is a tempered glass or laminated glass or double-glazing glass or a combination of these.

12. Mold according to claim 10 where said glazing material is plastics transparent material.

13. Mold according to claim 10, where said elastomer plastic material includes filling materials able to increase compactness, hardness and deformability under charge.

14. Mold according to claim 13, where said charging material is made up of glass microspheres.

15. Mold according to any of claims from 10 to 14, where the wall of said internal cavity of the mold is covered by a metal layer in order to increase the life of the mold, said layer being thin enough as not to alter the elastic characteristics of the mold's material.

16. Mold according to any of the claims from 10 to 15, where at least one of said air exit holes has a diameter which is not smaller than the diameter of the entrance hole for said mixture, in order to obtain a discharge of the pressure created in the mold by the introduction of said mixture and to avoid an unwanted pressure increase.

17. Mold according to any of the preceding claims, obtained by casting and curing the plastic material onto a reproducing model.

18. Mold according to any of the claims from 10 to 17, made up by the combination of two separate pieces.

19. Mold according to any of the claims from 10 to 18, showing a general ring-shaped configuration that is arranged only in correspondence to the pane periphery so as to surround the same pane for the application of the desired gasket.

## Patentansprüche

1. Verfahren zur Herstellung eines Verglasung-Moduls, der eine Scheibe (6) aus einem Verglasungs-Material für die Verwendung bei einem Automobil und eine an der Umfangsfläche derselben haftende Polyurethan-Dichtung (7) umfaßt, wobei diese Dichtung hergestellt worden ist durch Polymerisieren einer Mischung, die umfaßt (a) eine Prepolymer-Zusammensetzung, bestehend aus dem Produkt der Umsetzung zwischen einem Isocyanat und Polyolen, und (b) ein Kettenverlängerungsmittel, und eine direkt auf die Scheibe aufgebrachte Form ausfüllt, wobei die genannte Mischung in die genannte Form (1) eingeführt wird durch eine Eintrittsöffnung (8) in Gegenwart einer Auslaßöffnung für den in der Form durch die Einführung der Mischung erzeugten Druck, dadurch gekennzeichnet, daß die Form-Füllungs-Geschwindigkeit so gewählt wird, daß die gesamte Form-Füllungszeit kürzer ist als die Gelbildungs(Gelierungs)zeit dieser Mischung und das außerdem charakterisiert ist durch die ausschließliche Ausnutzung der durch die exotherme Polyurethan-Polymerisations-Reaktion entwickelten Wärme zur Einstellung der Reaktionstemperatur im Innern der Form und durch die Verwendung einer solchen Form, die hergestellt ist aus einem Elastomer, das an seiner Oberfläche und an der Scheibe von selbst abdichtet und an dem Polyurethan nicht haftet, wobei die genannte Form hergestellt worden ist durch Formen auf einem Vervielfältigungsmodell für diese Dichtung, und dadurch, daß die genannte Auslaßöffnung einen Durchmesser hat, der nicht kleiner ist als der Durchmesser der Eintrittsöffnung für die Mischung.

2. Verfahren nach Anspruch 1, worin die genannten Isocyanate aromatische oder aliphatische Isocyanate sind, die beide bei einer Temperatur zwischen 23 und 35°C flüssig sind.

3. Verfahren nach einem der Ansprüche 1 oder 2, worin die genannte Mischung eine Gelbildungszeit aufweist, die bei 25°C nicht weniger als 30 s beträgt.

4. Verfahren nach einem der Ansprüche 1 bis 3, worin der in der Form gemessene Einführungsdruck nicht mehr als 3 kg/cm² beträgt.

5. Verfahren nach einem der vorhergehenden Ansprüche, worin die Temperatur der in die Form eingeführten Mischung nicht weniger als 25°C beträgt.

6. Verfahren nach einem der vorhergehenden Ansprüche, worin der Einführung der genannten Mischung eine Entgasung vorhergeht, so daß bei der Polymerisation der genannten Mischung ein Polyurethan-Material entsteht, das ein kompaktes (dichtes) Elastomer darstellt.

7. Verfahren nach einem der vorhergehenden Ansprüche, worin das genannte Verglasungs-Material getempertes Glas oder Laminat-Glas oder Doppelverglasungsglas oder eine Kombination davon ist.

8. Verfahren nach Anspruch 7, worin das Glas mit Antiberst-Filmen oder dünnen Schichten aus einem Sonnenlicht reflektierenden Überzug beschichtet wird.

9. Verfahren nach einem der Ansprüche 1 bis 6, worin das Verglasungs-Material ein transparentes Kunststoff-Material ist.

10. Form für die Herstellung eines Verglasungs-Moduls, der eine Scheibe (6) aus einem Verglasungs-Material für die Verwendung bei einem Automobil und eine Polyurethan-Dichtung (7), die an deren Umfangsfläche haftet, umfaßt, wobei diese Dichtung hergestellt worden ist durch Polymerisieren einer Mischung, die umfaßt (a) eine Prepolymer-Zusammensetzung, bestehend aus dem Produkt der Umsetzung zwischen Isocyanaten und Polyolen und (b) ein Kettenverlängerungsmittel, wobei die Form (1) einen inneren Hohlraum (9) und Eintritts- und Auslaß-Öffnungen für die Einführung der genannten Mischung, die polymerisiert werden soll, aufweist, dadurch gekennzeichnet, daß die genannte Form aus einem elastomeren Kunststoff-Material hergestellt ist, das ausgewählt wurde aus der Klasse, die umfaßt Siliconelastomere, fluoridierte Silicone oder fluoridiertes Polyurethan oder eine Kombination davon, das Selbst-Abdichtungs-Eigenschaften gegenüber sich selbst und gegenüber der Scheibe aufweist und an dem Polyurethan nicht haftet, wobei die genannte Auslaßöffnung einen Durchmesser hat, der nicht kleiner ist als der Durchmesser der Eintrittsöffnung für die Mischung, und daß die Temperatur im Innern der Form ausschließlich eingestellt wird durch Ausnutzung der Wärme, die bei der exothermen Polymerisations-Reaktion der genannten Mischung entsteht.

11. Form nach Anspruch 10, worin das genannte Verglasungs-Material ein getempertes Glas oder ein Laminatglas oder ein Doppelverglasungsglas oder eine Kombination davon ist.

12. Form nach Anspruch 10, worin das genannte Verglasungs-Material ein transparentes Kunststoff-Material ist.

13. Form nach Anspruch 10, worin das genannte elastomere Kunststoff-Material Füllstoffe enthält, welche die Kompaktheit (Dichte), die Härte und Verformbarkeit beim Einsetzen erhöhen können.

14. Form nach Anspruch 13, worin das Füllungsmaterial aus Glas-Mikrokugeln besteht.

15. Form nach einem der Ansprüche 10 bis 14, worin die Wand des inneren Hohlraums der Form von einer Metallschicht bedeckt ist, um die Lebensdauer der Form zu erhöhen, wobei die genannte Schicht dünn genug ist, um die elastischen Eigenschaften des Materials der Form nicht zu verändern.

16. Form nach einem der Ansprüche 10 bis 15, worin mindestens eine der Luftaustrittsöffnungen einen Durchmesser hat, der nicht kleiner ist als der Durchmesser der Eintrittsöffnung für die genannte Mischung, um einen Abbau (Entspannung) des Druckes zu erzielen, der in der Form durch Einführung der genannten Mischung erzeugt wird, und um einen unerwünschten Druckanstieg zu vermeiden.

17. Form nach einem der vorhergehenden Ansprüche, die durch Gießen und Aushärten des Kunststoff-Materials auf einem Vervielfältigungsmodell hergestellt worden ist.

18. Form nach einem der Ansprüche 10 bis 17, die durch Kombinieren von zwei getrennten Teilen hergestellt worden ist.

19. Form nach einem der Ansprüche 10 bis 18, die eine generell ringförmige Gestalt hat, die nur entlang des Scheibenumfangs so angeordnet ist, daß sie die Scheibe umgibt für das Aufbringen der gewünschten Dichtung.

## Revendications

1. Procédé pour réaliser un module de vitrage comprenant une vitre (6) formée d'un matériau de vitrage destiné à être utilisé dans des applications dans le domaine de l'automobile, et une garniture d'étanchéité en polyuréthane (7) qui adhère sur la zone périphérique de la vitre, une telle garniture d'étanchéité étant produite par polymérisation d'un mélange comprenant a) une composition de prépolymère constituée par le produit de réaction d'isocyanate et de polyols et b) un extenseur de chaîne, et qui remplit un moule appliqué directement sur la vitre, selon lequel on introduit ledit mélange dans ledit moule (11), par l'intermédiaire d'un trou d'entrée (8), moyennant la présence d'un trou de sortie pour la pression créée dans le moule par l'introduction de ce mélange, caractérisé en ce qu'on choisit la vitesse de remplissage du moule de manière que la durée totale de remplissage du moule soit inférieure à la durée de prise en masse du mélange, caractérisé en outre par l'utilisation exclusivement de la chaleur dégagée par la réaction de polymérisation exothermique du polyuréthane pour établir la température de réaction à l'intérieur du moule, par l'utilisation, en tant que moule, d'un moule formé par un élastomère qui réalise une auto-étanchéité sur sa propre surface et sur la vitre et est anti-adhésif vis-à-vis du polyuréthane, ledit moule étant obtenu au moyen d'une opération de moulage sur un modèle de reproduction d'une telle garniture d'étanchéité, et par le fait que ledit trou de sortie possède un diamètre inférieur au diamètre du trou d'entrée du mélange.

2. Procédé selon la revendication 1, selon lequel lesdits isocyanates sont des isocyanates aromatiques ou aliphatiques tous deux liquides à une température comprise entre 23 et 35°C.

3. Procédé selon l'une quelconque des revendications 1 ou 2, selon lequel ledit mélange possède un temps de prise qui n'est pas inférieur à 30 secondes à une température de 25°C.

4. Procédé selon l'une quelconque des revendications 1 à 3, selon lequel la pression d'introduction mesurée dans le moule n'est pas supérieure à 3 kg/cm².

5. Procédé selon l'une quelconque des revendications précédentes, selon lequel la température dudit mélange introduit dans le moule n'est pas inférieure à 25°C.

6. Procédé selon l'une quelconque des revendications précédentes, selon lequel l'introduction dudit mélange est précédée par une opération de dégazage de manière que la polymérisation de ce mélange produise un matériau formé de polyuréthane, qui est un élastomère compact.

7. Procédé selon l'une quelconque des revendications précédentes, selon lequel ledit matériau de vitrage est un verre trempé ou un verre feuilleté ou un verre à double vitrage ou une combinaison de tels matériaux.

8. Procédé selon la revendication 7, selon lequel le verre est recouvert par des films anti-lacération ou par des couches minces d'un revêtement réfléchissant la lumière solaire.

9. Procédé selon l'une quelconque des revendications 1 à 6, selon lequel ledit matériau du vitrage est une matière plastique transparente.

10. Moule pour la réalisation d'un module de vitrage comprenant une vitre (6) formée d'un matériau de vitrage destiné à être utilisé dans des applications dans le domaine de l'automobile, et une garniture d'étanchéité en polyuréthane (7) qui adhère sur la zone périphérique de la vitre, une telle garniture d'étanchéité étant produite par polymérisation d'un mélange comprenant a) une composition de prépolymère constituée par le produit de réaction d'isocyanates et de polyols et b) un extenseur de chaîne, ledit moule (1) possédant une cavité intérieure (9) et un trou d'entrée et de sortie pour l'introduction dudit mélange devant être polymérisé, caractérisé en ce que ledit moule est formé d'une matière plastique élastomère choisie dans la classe qui inclut les élastomères au silicone, des silicones fluorés ou du polyuréthane fluoré ou bien une combinaison de ces matériaux, présentant des caractéristiques d'auto-étanchéité sur eux-mêmes et sur la vitre et étant anti-adhésifs par rapport au polyuréthane, ledit trou de sortie possédant un diamètre non inférieur au diamètre du trou d'entrée du mélange, et en ce que la température inférieure du moule est établie exclusivement moyennant l'utilisation de la contribution thermique développée par la réaction de polymérisation exothermique dudit mélange.

11. Moule selon la revendication 10, dans lequel ledit matériau de vitrage est un verre trempé ou un verre feuilleté ou un verre de double vitrage ou une combinaison de ces matériaux.

12. Moule selon la revendication 10, dans lequel ledit matériau de vitrage est une matière plastique transparente.

13. Moule selon la revendication 10, dans lequel ladite matière plastique élastomère comprend les matériaux de remplissage aptes à augmenter la compacité, la dureté et la déformabilité sous charge.

14. Moule selon la revendication 13, dans lequel ledit matériau de charge est constitué de sphères microscopiques de verre.

15. Moule selon l'une quelconque des revendications 10 à 14, dans lequel la paroi de ladite cavité interne du moule est recouverte par une couche d'un métal de manière à accroître la durée de vie du moule, ladite couche étant suffisamment mince pour ne pas modifier la caractéristique élastique du matériau du moule.

16. Moule selon l'une quelconque des revendications 10 à 15, dans lequel au moins l'un desdits trous de sortie de l'air possède un diamètre qui n'est pas inférieur au diamètre du trou d'entrée pour ledit mélange, pour obtenir une décharge de la pression créée dans le moule par l'introduction dudit mélange et pour éviter un accroissement indésirable de la pression.

17. Moule selon l'une quelconque des revendications précédentes, obtenu par coulée et cuisson de la matière plastique sur un modèle de reproduction.

18. Moule selon l'une quelconque des revendications 10 à 17, constitué par la combinaison de deux pièces séparées.

19. Moule selon l'une quelconque des revendications 10 à 18, présentant une configuration générale de forme annulaire qui est disposée uniquement en correspondance avec la périphérie du panneau de manière à entourer ce panneau pour l'application de la garniture d'étanchéité désirée.
